# EUROPÄISCHE PATENTANMELDUNG

(11) **EP 1 653 195 A1**
(43) Veröffentlichungstag der Anmeldung: **03.05.2006**
(21) Anmeldenummer: 05109251.8
(22) Anmeldetag: 05.10.2005
(51) Int. Cl.: G01C 21/34, G08G 1/0968

(54) **System und Verfahren zur Routenführung im Nahbereich des Routenziels**

(30) Priorität: 02.11.2004 DE 102004052908
(71) Anmelder: SIEMENS AKTIENGESELLSCHAFT, 80333 München (DE)
(72) Erfinder: Würz, Reiner, 35630 Ehringshausen (DE)

(57) **Zusammenfassung**

Die Erfindung betrifft ein System und ein Verfahren zur Routenführung eines Bedieners entlang einer geplanten Route zu einem aktuellen Zielpunkt. Das System weist auf eine Positionserfassungseinrichtung zur Bestimmung einer aktuell zurückgelegten Route des Bedieners, eine mit der Positionserfassungseinrichtung verbundene Recheneinheit zur Generierung von Routenführungshinweisen in Abhängigkeit von der geplanten und der aktuell zurückgelegten Route, eine mit der Recheneinheit verbundene Ausgabeeinheit zur Ausgabe der Routenführungshinweise an den Bediener und eine mit der Recheneinheit verbundenen Speichereinrichtung zum Ablegen von in der Vergangenheit von dem Bediener zurückgelegten früheren Routen zu früheren Zielpunkten. Erfindungsgemäß prüft die Recheneinheit bei Übereinstimmung des aktuellen Zielpunktes mit einem zu mindestens einer früheren Route gehörenden früheren Zielpunkt, ob ein in den Zielpunkt einmündender Endabschnitt der geplanten Route von einem in den Zielpunkt einmündenden Endabschnitt der mindestens einen früheren Route abweicht, während gleichzeitig der Anfangspunkt des Endabschnitts der geplanten Route mit dem Anfangspunkt des Endabschnitts der früheren Route übereinstimmt. In diesem Fall generiert die Recheneinheit Routenführungshinweise entlang des Endabschnitts der mindestens einen früheren Route und gibt sie an den Bediener aus.

## Beschreibung

Die Erfindung betrifft ein System und ein Verfahren zur Routenführung eines Bedieners entlang einer geplanten Route zu einem aktuellen Zielpunkt. Das System enthält eine Positionserfassungseinrichtung zur Bestimmung einer aktuell zurückgelegten Route des Bedieners, eine mit der Positionserfassungseinrichtung verbundene Recheneinheit zur Generierung von Routenführungshinweisen in Abhängigkeit von der geplanten und der aktuell zurückgelegten Route, eine mit der Recheneinheit verbundene Ausgabeeinheit zur Ausgabe der Routenführungshinweise an den Bediener und eine mit der Recheneinheit verbundene Speichereinrichtung zum Ablegen von in der Vergangenheit von dem Bediener zurückgelegten früheren Routen zu früheren Zielpunkten.

Eine Vorrichtung zur Zielführungsunterstützung eines Fahrzeugführers zur Erreichung einer Zielposition mit einem Fahrzeug, bei der die fortlaufend ermittelte aktuelle Ortsposition des Fahrzeugs in einem Speicher abgelegt wird, ist aus der EP-0805951-B1 bekannt. Die Zielposition der aktuellen Fahrt wird nach Wahrscheinlichkeitsgesichtspunkten anhand eines Vergleichs von in der Vergangenheit gespeicherten Ortspositionen mit aktuellen Ortspositionen abgeleitet. Der Fahrer muss demnach das Fahrtziel nicht mehr selbst in das System eingeben.

Eine Ziel- oder Routenführung eines Bedieners, beispielsweise eines Kraftfahrzeugführers, eines Radfahrers oder eines Fußgängers, setzt stets voraus, dass eine geplante Route zu dem vom Bediener gewünschten Zielort vorliegt. Diese Route wird vorab entweder in einer Routenplanungseinheit des Routenführungssystems selbst oder in einem externen Routenplanungssystem, beispielsweise auf einem Heim-Computer über Internet bzw. mittels einer lokal installierten Routenplanungssoftware oder auf einem zentralen Routenplanungsserver, berechnet. Dabei stellen die heute auf dem Markt verfügbaren Routenplanungssysteme einem Benutzer verschiedene Möglichkeiten der Eingabe des Fahrtziels zur Verfügung. Bekannt sind eine textuelle Eingabe über Adressangaben, also Ort, Straße und Hausnummer, über Festnetz-Telefonnummern, über Längen- und Breitengrad oder auch über Code- bzw. Kurzbezeichnungen, die mit einer im Speicher abgelegten genaueren Angabe verknüpft sind. Weiterhin bekannt ist die grafische Auswahl des Fahrtziels auf einer elektronischen Karte mittels Eingabehilfsmitteln wie Maus oder Cursor.

Mit welcher Genauigkeit das Fahrtziel dann von der Routenplanung berücksichtigt wird, hängt vom Detaillierungsgrad des elektronischen Kartenmaterials ab. Ein höherer Detaillierungsgrad erfordert dabei eine größere Speicherkapazität, die aus Kostengründen nicht in jedem Routenplanungs- und - führungssystem zur Verfügung gestellt werden kann. Aus diesem Grund werden der Routenplanung und Routenführung häufig weniger hoch auflösende Karten zugrunde gelegt als sie für eine Unterscheidung einzelner Hausnummern voneinander erforderlich wären. Bei einer geringeren Auflösung wird, entsprechend der üblichen Repräsentation eines Straßennetzes durch Kanten und Knoten, den Straßen, insbesondere den kurzen Straßen, nur ein Anfangs- und Endknoten und eine dazwischen liegende Kante zugeordnet, d.h. alle Hausnummern dieser Straße werden über diese eine Kante und über den Anfangs- und Endknoten repräsentiert. Bei längeren Straßen sind entsprechend Gruppen von Hausnummern jeweils einer Kante zugeordnet, d.h. die Straße wird in mehrere Kanten aufgeteilt.

Aufgrund der Zuordnung des Zielpunktes einer Route zu einer Zielkante findet die Routenplanung dann bei der Suche nach einer optimalen Route den kürzesten bzw. schnellsten Weg zu entweder dem Anfangs- oder Endknoten dieser Zielkante. Dieser Knoten wird im Folgenden als Zielknoten bezeichnet. Hat der Bediener des Routenplanungssystems nun eine Hausnummer an dem vom Zielknoten abgewandeten Ende der Zielkante als Fahrtziel ausgewählt, so muss er noch die gesamte Zielkante entlang fahren, bis er den Zielpunkt tatsächlich erreicht hat. Unter bestimmten Umständen kann dies zu Routenverläufen führen, die als ungünstig empfunden werden.

Aufgabe der vorliegenden Erfindung ist es, ein System und ein Verfahren zur Routenführung anzugeben, mit denen ein Bediener im Zielbereich einer aktuell zurückzulegenden Route entlang eines von ihm als günstig empfundenen Verlaufs der Route geführt wird.

Diese Aufgabe wird mit einem eingangs genannten System mit den kennzeichnenden Merkmalen des Anspruchs 1 sowie mit einem Verfahren nach Anspruch 7 gelöst

Erfindungsgemäß prüft die Recheneinheit des Systems bei Übereinstimmung des aktuellen Zielpunktes mit einem zu mindestens einer früheren Route gehörenden früheren Zielpunkt, ob ein in den Zielpunkt einmündender Endabschnitt der geplanten Route von einem in den Zielpunkt einmündenden Endabschnitt der mindestens einen früheren Route abweicht, während gleichzeitig der Anfangspunkt des Endabschnitts der geplanten Route mit dem Anfangspunkt des Endabschnitts der früheren Route übereinstimmt, und dass in diesem Fall die Recheneinheit Routenführungshinweise entlang des Endabschnitts der mindestens einen früheren Route generiert und an den Bediener ausgibt.

Die grundlegende Idee besteht demnach darin, in die Routenführung im Bereich nahe des Zielpunktes die bereits in der Vergangenheit vom Bediener zurückgelegten Routenverläufe mit einzubeziehen. Dabei werden die in einer Speichereinrichtung abgelegten, früheren Routen darauf untersucht, ob mindestens eine von ihnen denselben Zielpunkt wie die aktuelle Route hatte. Weicht diese mindestens eine Route in ihrem in den Zielpunkt einmündenden Verlauf von der aktuellen Route ab, ist dies ein Indiz dafür, dass der Bediener mit dem von der Routenplanung vorgeschlagenen Verlauf nicht einverstanden war. Der das Ende einer Route bildende Verlauf, der in den Zielpunkt einmündet, wird als Endabschnitt bezeichnet. Da man sich einem gemeinsamen Zielpunkt jedoch auch auf völlig verschiedenen Wegen nähern kann, wird erfindungsgemäß weiterhin geprüft, ob die mindestens eine frühere und die aktuelle Route auch in den Anfangspunkten der voneinander abweichenden Endabschnitte übereinstimmen, also ob die mindestens eine frühere und die aktuelle Route sich wenigstens kreuzen oder sogar einen gleich verlaufenden Abschnitt aufweisen. Ist dies der Fall, so wählt die Routenführung für den Zieleinlauf anstelle des Endabschnitts der aktuellen Route den vom Bediener in der Vergangenheit bevorzugten Endabschnitt der mindestens einen früheren Route und generiert die entsprechenden Routenführungshinweise. Auf diese Weise wird in der Nähe des Zielpunktes ein Routenverlauf erzeugt, der vom Bediener als günstiger empfunden wird, was die Akzeptanz und die Bedienerfreundlichkeit des Routenführungssystems erhöht.

In einer bevorzugten Ausgestaltung wird die erfindungsgemäße Anpassung des Endverlaufs der aktuellen Route an den Verlauf einer früher gefahrenen Route erst vorgenommen, wenn mehr als eine früher gefahrene Route die Prüfbedingungen, also gleicher Zielpunkt und voneinander abweichender Endabschnitt mit übereinstimmendem Anfangspunkt, erfüllt und wenn diese mehreren Routen zueinander gleiche Endabschnitte aufweisen. Die Anzahl dieser Routen muss eine vorgegebene Mindestanzahl erreichen. Bei mehr als einer von der aktuellen Route in derselben Weise abweichenden früheren Route kann mit höherer Wahrscheinlichkeit davon ausgegangen werden, dass der Bediener den früher gefahrenen Verlauf des Endabschnitts bevorzugt und dass man demnach mit einer Änderung des Endverlaufs der aktuellen Route tatsächlich seinen Vorstellungen entspricht.

In einer weiteren Ausgestaltung werden nur diejenigen Routen in der Speichereinrichtung abgelegt, die zum Zeitpunkt des Zurücklegens der Route von der zugehörigen geplanten Route abgewichen sind. Damit werden nur die früheren Routen erfasst, die vom Bediener tatsächlich gegenüber der zugehörigen geplanten Route bevorzugt wurden. Dies spart zum einen Speicherplatz und verkürzt zum anderen die Abarbeitungszeit des Suchalgorithmus zum Finden der mindestens einen, die Prüfbedingungen erfüllenden früheren Route.

In einer Weiterbildung des erfindungsgemäßen Systems ist eine mit der Recheneinheit verbundene Eingabeeinheit vorgesehen, mit der der Bediener entscheiden kann, ob eine zurückgelegte und von der dazugehörigen geplanten Route im Endabschnitt abweichende Route in der Speichereinrichtung abgelegt werden soll. Diese Auswahl kann entweder einmal grundsätzlich für alle zukünftigen Routenverfolgungen oder jeweils einzeln nach dem Ende einer Fahrt und dem Feststellen einer Abweichung zwischen dem geplanten und dem zurückgelegten Endabschnitt getroffen werden. Dem Bediener wird so die Möglichkeit gegeben, das Systemverhalten nach seinen Wünschen zu beeinflussen sowie auf besondere Situationen zu reagieren. Beispielsweise kann ein temporäres Hindernis, wie eine Baustelle oder ein Verkehrsunfall, den Bediener am Verfolgen des Endabschnitts der aktuellen Route hindern. Um zu vermeiden, dass das Routenführungssystem zukünftig stets den genommenen Umweg ausgibt, wird der Bediener das Abspeichern dieser ausnahmsweise abweichenden Route unterbinden.

Um weiteren Speicherplatz zu sparen, ist in einer Weiterbildung der Erfindung vorgesehen, dass lediglich der Endabschnitt der früher zurückgelegten Routen gespeichert wird.

Weiterhin ist vorgesehen, dass eine mit der Recheneinheit verbundene Eingabeeinheit vorgesehen ist, mit der der Bediener in der Speichereinrichtung abgelegte frühere Routen löschen kann. Der Bediener kann damit das Systemverhalten noch besser an seine Bedürfnisse anpassen. Beispielsweise kann der Fall eintreten, dass sich der früher bevorzugt zurückgelegte Endabschnitt aufgrund äußerer Umstände, wie Verkehrsdichte oder Straßenqualität, oder aufgrund geänderter Vorlieben des Bedieners, als nicht mehr günstig erweist. Ein Löschen der diesen Endabschnitt enthaltenden Routen führt beim nächsten Ansteuern desselben Zielpunktes zur Ausgabe einer standardmäßig geplanten Route.

Die Erfindung wird nachfolgend anhand eines Ausführungsbeispiels und der Zeichnung näher erläutert. Es zeigen
- Figur 1: ein System zur Routenführung eines Fahrzeugführers;
- Figuren 2a, b: je eine Darstellung eines möglichen Verlaufs von Endabschnitten;
- Figuren 3, 4: ein Ablaufdiagramm eines Verfahrens zur Routenführung.

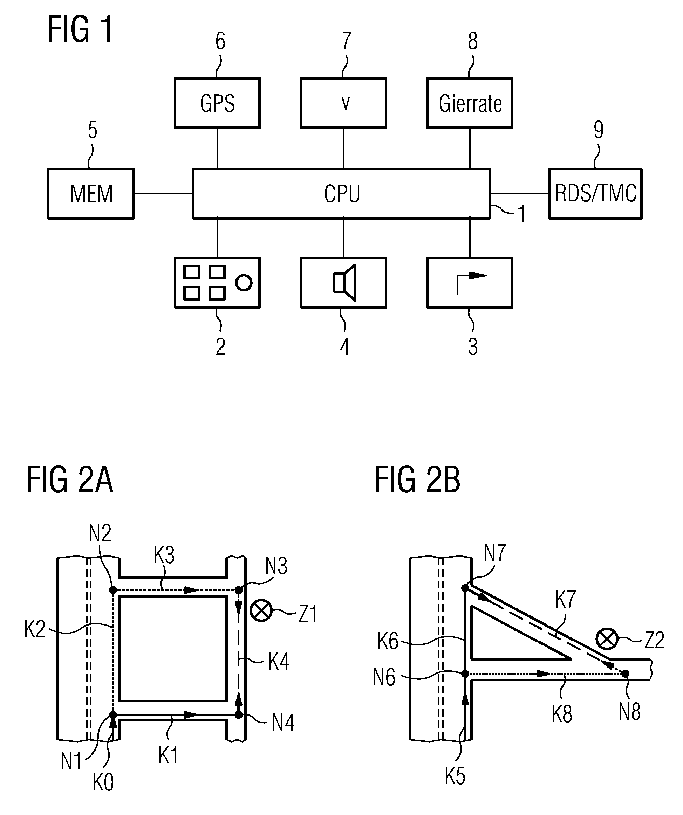

In Figur 1 ist ein in einem Kraftfahrzeug installiertes System zur Routenführung des Fahrzeugführers entlang einer geplanten Route dargestellt, das eine zentrale Recheneinheit 1 enthält. Mit der Recheneinheit 1 sind jeweils verbunden eine Positionserfassungseinrichtung 6, ein Geschwindigkeitssensor 7, ein Gierratensensor 8, eine Speichereinrichtung 5, einen Verkehrsfunkempfänger 9, eine Eingabeeinrichtung 2 sowie zwei Ausgabeeinrichtungen, eine Anzeigeeinheit 3 und eine Lautsprechereinheit 4.

Die Positionserfassungseinrichtung 6 ist ein GPS-Satellitenempfänger, der die aktuelle Position des Kraftfahrzeugs ermittelt. Die gemessene GPS-Position kann per Koppelnavigation mit Hilfe der Informationen des Geschwindigkeitssensors 7 und des Gierratensensors 8 gestützt werden, woraus ein von der Recheneinheit 1 ermittelter Wert der Fahrzeugposition resultiert. Eine Aufeinanderfolge von aktuell ermittelten Fahrzeugpositionen bildet eine aktuell vom Kraftfahrzeug und damit auch dem Fahrzeugführer zurückgelegte Route.

In der Speichereinrichtung 5 ist eine vorab von der Recheneinheit 1 geplante Route zu einem aktuellen Zielpunkt sowie eine elektronische Straßenkarte abgelegt. Die elektronische Straßenkarte wird sowohl bei der Routenplanung als auch bei der anschließenden Routenführung genutzt. Während der Routenführung vergleicht nun die Recheneinheit 1 den Verlauf der geplanten Route mit dem Verlauf der aktuell zurückgelegten Route und gibt auf der Anzeigeeinheit 3 und der Lautsprechereinheit 4 entsprechende Routenführungshinweise aus, die den Fahrzeugführer entlang der geplanten Route leiten sollen. Die Routenführungshinweise erfolgen in bekannter Weise durch die Anzeige von Pfeilsymbolen in Verbindung mit der elektronischen Straßenkarte sowie durch die akustische Ausgabe von Richtungshinweisen und Fahranweisungen. Die Recheneinheit 1 ist zusätzlich in der Lage, die Route dynamisch umzuplanen, wofür sie die mittels des Verkehrsfunkempfängers 9 empfangenen Verkehrsnachrichten über Verkehrsbehinderungen in bekannter Weise verarbeitet.

Die Recheneinheit 1 stellt bei dem Vergleich zwischen geplanter und aktuell zurückgelegter Route weiterhin fest, ob sich der Fahrzeugführer bei der Annäherung an den Zielpunkt von der geplanten Route entfernt. Weicht die aktuell zurückgelegte Route auf dem letzten Abschnitt zum Zielpunkt von der geplanten Route ab, mündet jedoch in den Zielpunkt ein und endet dort, so gibt die Recheneinheit 1 auf der Anzeigeeinheit 3 einen dementsprechenden Hinweis aus und fordert den Fahrzeugführer auf, das Abspeichern der aktuell zurückgelegten Route zu bestätigen. Ist der Fahrzeugführer von der geplanten Route lediglich aufgrund einer aktuellen Verkehrsstörung, beispielsweise einer Unfallstelle, abgewichen, so wird er das Abspeichern ablehnen. Ist er jedoch von der geplanten Route abgewichen, da ihm deren Endverlauf nicht gefiel, so wird er dem Abspeichern zustimmen. Die Ablehnung oder Zustimmung wird vom Fahrzeugführer per Eingabeeinrichtung 2 eingegeben, beispielsweise durch Betätigung entsprechender Tasten oder durch Auswahl der Zustimmungs- bzw. Ablehnungsfunktion und Bestätigung der Auswahl per Dreh-Drücksteller.

Zwei mögliche Szenarien für ungünstig geplante Routen im Nahbereich von Zielpunkten sind den Figuren 2a und 2b zu entnehmen. In Figur 2a sind eine vierspurige und eine zweispurige Straße vertikal verlaufend und parallel zueinander dargestellt. Diese beiden Straßen sind über zwei ebenfall parallel zueinander und horizontal verlaufende, zweispurige Straßen miteinander verbunden. Aus dieser Anordnung ergeben sich insgesamt vier Kreuzungspunkte, die als Knoten N1 bis N4 in der elektronischen Straßenkarte in der Speichereinrichtung 5 abgelegt sind. Die vier Knoten sind über vier Kanten K1 bis K4 miteinander verbunden. Der Zielpunkt Z1 liegt in der Nähe des Knotens N3, auf der rechten Seite der Kante K4. Da der Zielpunkt Z1 damit der Kante K4 zugeordnet wird, ist die K4 die Zielkante der geplanten Route. Die geplante Route nähert sich dem dargestellten Zielbereich von einer Kante K0 her. Bei der Routenplanung wurde als optimale Route die kürzeste Verbindung zwischen dem Endknoten N1 der Kante K0 und einem der Anfangsknoten N4 oder N3 der Zielkante K4 gesucht. Gefunden wurde demnach die Kante K1. Der Fahrzeugführer wird also bei der Annäherung an den Knoten N1 angewiesen, als erstes nach rechts abzubiegen und bei der nächsten Gelegenheit nach links. Nach dem Einbiegen in die zur Kante K4 gehörende Straße wird das Routenführungssystem den Hinweis ausgeben "Ziel erreicht", obwohl noch die gesamte Kante K4 entlang gefahren werden muss, bis man tatsächlich am Zielpunkt Z1 ankommt. Wie der durchgezogen dargestellte Verlauf der geplanten Route deutlich macht, endet die geplante Route bereits kurz nach dem Einbiegen in die Kante K4 und damit weit entfernt vom Zielpunkt Z1. Entsprechend des geplanten Verlaufs muss der Fahrzeugführer also von der vierspurigen Straße abbiegen und insgesamt zwei zweispurigen Straßen bis zum Erreichen von Z1 folgen. Insbesondere in der Stadt können solche zweispurigen Straßen durch geparkte Fahrzeuge zu nur langsam passierbaren Straßen werden. Sofern dies dem Fahrzeugführer bewusst ist, wird er anstelle des vorgeschlagenen, durchgezogen dargestellten Endabschnitts der geplanten Route den alternativen, gestrichelt dargestellten Routenendverlauf wählen. Er bleibt auf der gut befahrbaren vierspurigen Straße so lange wie möglich, d.h. bis zum Knoten N2. Anschließend biegt er nach rechts auf die Kante K3 ein und erreicht nach nochmaligem Abbiegen nach rechts am Knoten N3 den Zielpunkt Z1. Dieser Weg ist zwar ein wenig länger als der Weg über die Kante K1, jedoch muss der Fahrzeugführer nur eine zweispurige Straße vollständig abfahren, was er als angenehmer und günstiger empfinden wird.

Ein weiteres Szenario ist in Figur 2b dargestellt. Von einer vertikal verlaufenden vierspurigen Straße gehen zwei zweispurige Straßen ab. Eine der zweispurigen Straßen verläuft horizontal und die andere verbindet die horizontale und die vertikale Straße im spitzen Winkel. Die Kreuzungspunkte sind als Knoten N6, N7 und N8 abgespeichert und die diese Knoten verbindenden Kanten als K6, K7 und K8. Der Zielpunkt Z2 liegt in der Nähe des Knoten N8 auf der rechten Seite der Kante K7, d.h. die Kante K7 bildet die Zielkante. Die geplante Route nähert sich dem dargestellten Zielbereich von einer Kante K5 her. Als kürzeste Verbindung zwischen dem Endknoten N6 der Kante K5 und einem der Anfangsknoten N7 oder N8 der Zielkante K7 wurde die Kante K6 gefunden. Folgt der Fahrzeugführer dem durchgezogen dargestellten, geplanten Routenverlauf so muss er nach dem Einbiegen in die Zielkante K7 noch der gesamten K7 bis zum Knoten N8 folgen. Ein Fahrzeugführer, der den Zielbereich kennt, wird jedoch bevorzugt in die horizontale Straße einbiegen, d.h. er wird dem gestrichelt gezeichneten Endabschnitt über die Kante K8 folgen und kurz in die K7 einbiegen. In diesem Fall ist der abweichend von der geplanten Route zurückgelegte Weg über die Kante K8 deutlich kürzer als der von dem Routenführungssystem vorgeschlagene Weg über die K6.

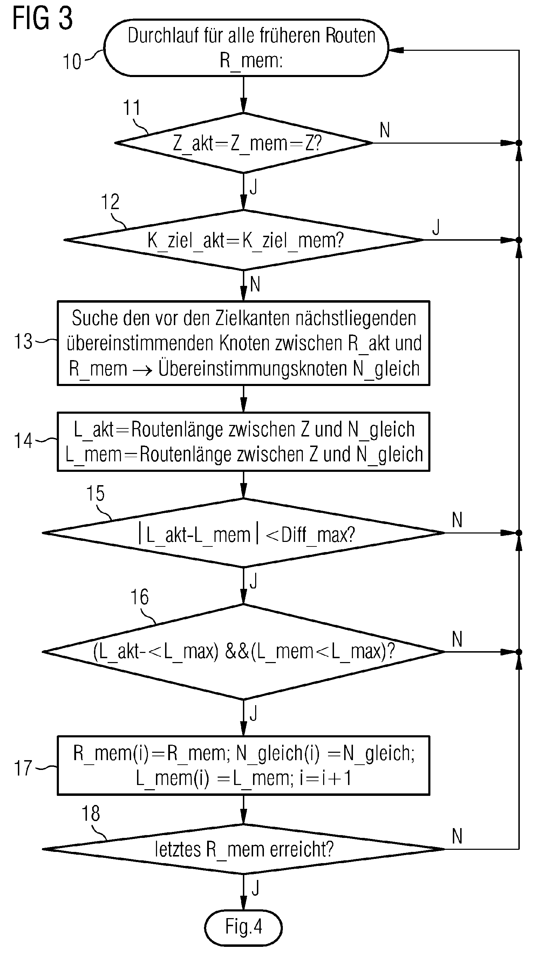

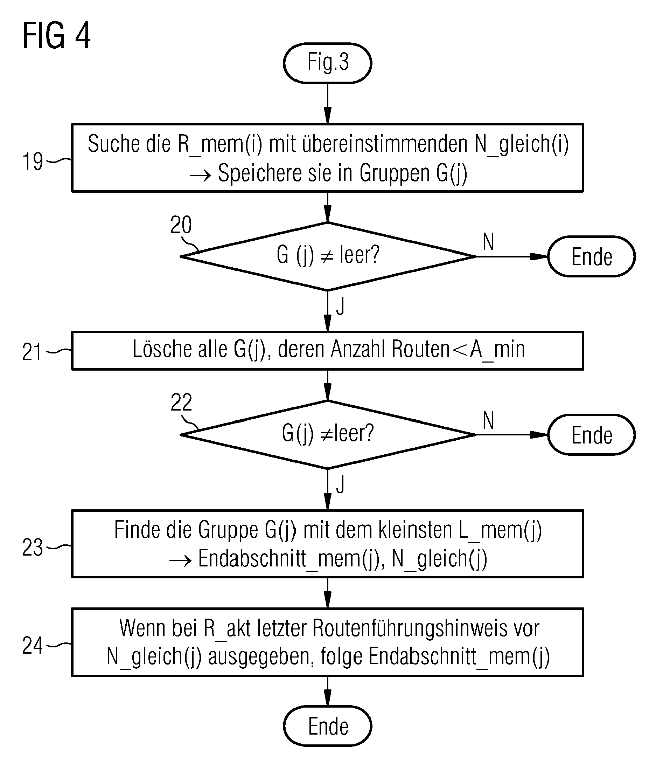

In den Figuren 3 und 4 ist ein Ablaufdiagramm eines von der Recheneinheit 1 durchgeführten Verfahrens zur Routenführung des Fahrzeugführers abgebildet. Dieses Verfahren kann von der Recheneinheit 1 durchgeführt werden, sobald eine geplante Route vorliegt und sofern in der Speichereinrichtung 5 mindestens eine früher zurückgelegte Route abgespeichert ist. Sollte sich die geplante Route aufgrund von Verkehrsbehinderungen ändern, so wird das Verfahren erneut durchgeführt oder, sofern es noch nicht abgeschlossen ist, neu gestartet.

Die abgespeicherten früheren Routen R_mem werden ausgehend vom Startpunkt schrittweise und nacheinander untersucht. In Schritt 11 wird geprüft, ob der Zielpunkt Z_akt der geplanten und damit aktuell vorliegenden Route R_akt mit dem gespeicherten Zielpunkt Z_mem der früheren Route R_mem übereinstimmt. Ist dies nicht der Fall, wird die nächste im Speicher abgelegte, frühere Route R_mem untersucht, d.h. es wird zum Startpunkt 10 zurückgegangen. Liegt eine Übereinstimmung in Form des gemeinsamen Zielpunktes Z vor, so wird in Schritt 12 geprüft, ob die Zielkante K_ziel_akt der geplanten Route R_akt mit der Zielkante K_ziel_mem der früheren Route R_mem übereinstimmt. Ist dies der Fall bedeutet dies, dass der in den Zielpunkt einmündende Endabschnitt der geplanten Route R_akt und der früher zurückgelegten Route R_mem zumindest im Bereich direkt vor dem Zielpunkt übereinstimmen. Damit liegt kein Problemfall nach der vorliegenden Erfindung vor, weshalb zur nächsten früheren Route und damit zu Startpunkt 10 verzweigt wird.

Unterscheiden sich die Zielkanten K_ziel_akt und K_ziel_mem voneinander, wird in Schritt 13 nach dem vor den beiden Zielkanten jeweils nächstliegenden Knoten gesucht, der zwischen den beiden Routen R_akt und R_mem wieder übereinstimmt. Dieser Knoten wird als Übereinstimmungsknoten N_gleich festgehalten. Im nächsten Schritt 14 werden die Längen des jeweiligen Teils der Routen R_akt und R_mem bestimmt, der zwischen dem gleichen Zielpunkt Z und dem Übereinstimmungsknoten N_gleich liegt. Dies entspricht der Bestimmung der Längen des jeweiligen Endabschnitts der Routen, also der Länge L_akt des nicht übereinstimmenden Endstücks der geplanten Route R_akt und der Länge L_mem des nicht übereinstimmenden Endstücks der früheren Route R_mem.

In Schritt 15 wird untersucht, ob der Unterschied in den Längen L_akt und L_mem eine obere Grenze Diff_max überschreitet. Ist dies der Fall, so weichen die Endabschnitts zu stark voneinander ab. Man kann dann nicht mehr darauf schließen, dass der Endabschnitt der früheren Route tatsächlich eine sinnvolle Alternative zur geplanten Route darstellt. In dem Fall wird zur nächsten früheren Route weitergegangen. Ist der Unterschied zwischen L_akt und L_mem klein genug, wird in Schritt 16 geprüft, ob die einzelnen Längen eine obere Grenze L_max nicht überschreiten. Die Grenze L_max wird sinnvoller weise so gewählt, dass sie einer maximalen Entfernung vom Zielpunkt Z entspricht, die noch als Nahbereich empfunden wird. Ein Überschreiten von L_max deutet dann darauf hin, dass die Routen über eine über den Nahbereich hinausgehende Strecke voneinander abweichen, was beispielsweise aufgrund unterschiedlicher Randparameter der Routenplanung, wie schnellste versus kürzeste Route oder verschiedene bevorzugte Straßenklassen, der Fall sein kann. In jedem Fall deutet eine Überschreitung des Nahbereichs darauf hin, dass der Unterschied in den Routen nicht allein aus den Vorlieben des Fahrzeugführers hinsichtlich der letzten Meter zum Zielpunkt resultiert. Demnach kann wieder zur nächsten früheren Route und damit zu Startpunkt 10 weitergegangen werden. Unterscheiden sich die Routen R_akt und R_mem jedoch nur im Nahbereich, so werden in Schritt 17 die Route R_mem, der Übereinstimmungsknoten K_gleih und die Länge des Endabschnitts L_mem in der Speichereinrichtung 5 abgelegt. Die Speicherung erfolgt in den Datenvektoren R_mem(i), N_gleich(i) und L mem(i) mit der Laufvariablen i, die nach dem Ablegen der zu einer gefundenen Route R_mem gehörenden Daten um Eins hochgezählt wird.

Das Suchen nach Routen R_mem, die die Prüfbedingungen 11, 12, 15 und 16 erfüllen, wird entsprechend der Abfrage 18 so lange fortgesetzt, bis die letzte abgespeicherte frühere Route untersucht worden ist.

Im nächsten Schritt 19 wird dann innerhalb der abgespeicherten Datenvektoren nach allen früheren Routen R_mem(i) mit jeweils gleichem Übereinstimmungsknoten N_gleich(i) gesucht. Diese Routen weisen denselben, von der geplanten Route abweichenden Endabschnitt auf. Die auf diese Weise zusammengehörenden Routen R_mem(i) werden jeweils einer Gruppe G(j) zugeordnet und in der Speichereinrichtung 5 abgelegt.

Sofern in Schritt 20 festgestellt wird, dass keine Routen mit übereinstimmenden Endabschnitten gefunden wurden, wird das Verfahren beendet und die Recheneinheit 1 gibt bei der Routenführung die Routenführungshinweise ausschließlich entlang der geplanten Route aus. Sind jedoch Routen mit übereinstimmenden Endabschnitten gefunden worden, so werden in Schritt 21 alle die Gruppen G(j) gelöscht, die weniger Routen enthalten als die vorgegebene Mindestanzahl A_min. Bleibt danach entsprechend der Überprüfung in Schritt 22 keine Gruppe G(j) mehr übrig, so ist das Verfahren an dieser Stelle ebenfalls beendet. Ansonsten wird in Schritt 23 die Gruppe G(j) mit dem kürzesten Endabschnitt, also dem kleinsten L_mem(j) gesucht. Der zugehörige Übereinstimmungsknoten N_gleich(j) und der zugehörige Endabschnitt Endabschnitt_mem(j) zwischen dem Knoten N_gleich(j) und dem Zielpunkt Z werden gesondert vermerkt. In Schritt 24 erfolgt dann die Routenführung entlang dieses Endabschnitts. Dafür wird solange gewartet, bis die aktuell entlang der geplanten Route R_akt erfolgende Routenführung kurz vor dem Übereinstimmungspunkt N_gleich(j) angelangt ist. Bevor der zu N_gleich(j) gehörende Routenführungshinweis ausgegeben wird, setzt die Recheneinheit 1 den Endabschnitt der geplanten Route R_akt auf den Endabschnitt_mem(j), d.h. die Routenführung folgt ab dem Knoten N_gleich dem Endabschnitt_mem(j).

## Patentansprüche

1. System zur Routenführung eines Bedieners entlang einer geplanten Route zu einem aktuellen Zielpunkt (Z_akt) mit einer Positionserfassungseinrichtung (6, 7, 8) zur Bestimmung einer aktuell zurückgelegten Route des Bedieners, einer mit der Positionserfassungseinrichtung (6, 7, 8) verbundenen Recheneinheit (1) zur Generierung von Routenführungshinweisen in Abhängigkeit von der geplanten und der aktuell zurückgelegten Route, einer mit der Recheneinheit (1) verbundenen Ausgabeeinheit (3, 4) zur Ausgabe der Routenführungshinweise an den Bediener und einer mit der Recheneinheit (1) verbundenen Speichereinrichtung (5) zum Ablegen von in der Vergangenheit von dem Bediener zurückgelegten früheren Routen (R_mem) zu früheren Zielpunkten (Z_mem), **dadurch gekennzeichnet, dass** die Recheneinheit (1) bei Übereinstimmung des aktuellen Zielpunktes (Z_akt) mit einem zu mindestens einer früheren Route (R_mem) gehörenden früheren Zielpunkt (Z_mem) prüft, ob ein in den Zielpunkt (Z) einmündender Endabschnitt der geplanten Route (R_akt) von einem in den Zielpunkt (Z) einmündenden Endabschnitt der mindestens einen früheren Route (R_mem) abweicht, während gleichzeitig der Anfangspunkt (N_gleich) des Endabschnitts der geplanten Route (R_akt) mit dem Anfangspunkt (N_gleich) des Endabschnitts der früheren Route (R_mem) übereinstimmt, und dass in diesem Fall die Recheneinheit (1) Routenführungshinweise entlang des Endabschnitts der mindestens einen früheren Route (R_mem) generiert und an den Bediener ausgibt.

2. System nach Anspruch 1, **dadurch gekennzeichnet, dass** die Recheneinheit (1) die Routenführungshinweise entlang des Endabschnitts der mindestens einen früheren Route (R_mem) erst erzeugt, wenn eine vorgegebene Mindestanzahl (A_min) an früheren Routen (R_mem(i)) die Prüfbedingungen erfüllen und untereinander denselben Endabschnitt (Endabschnitt_mem(j)) aufweisen.

3. System nach einem der vorhergehenden Ansprüche, **dadurch gekennzeichnet, dass** die Recheneinheit (1) eine zurückgelegte Route in der Speichereinrichtung ablegt, wenn die zurückgelegte Route von der dazugehörigen geplanten Route in dem Endabschnitt abweicht.

4. System nach einem der vorhergehenden Ansprüche, **dadurch gekennzeichnet, dass** eine mit der Recheneinheit (1) verbundene Eingabeeinrichtung (2) vorgesehen ist, mit der der Bediener entscheiden kann, ob eine zurückgelegte und von der dazugehörigen geplanten Route im Endabschnitt abweichende Route in der Speichereinrichtung (5) abgelegt werden soll.

5. System nach einem der vorhergehenden Ansprüche 3 oder 4, **dadurch gekennzeichnet, dass** die Recheneinheit (1) lediglich den Endabschnitt der zurückgelegten Route abspeichert.

6. System nach einem der vorhergehenden Ansprüche, **dadurch gekennzeichnet, dass** eine mit der Recheneinheit (1) verbundene Eingabeeinheit (2) vorgesehen ist, mit der der Bediener in der Speichereinrichtung abgelegte frühere Routen (R_mem) löschen kann.

7. Verfahren zur Routenführung eines Bedieners entlang einer geplanten Route (R_akt) zu einem aktuellen Zielpunkt (Z_akt), bei dem eine aktuell zurückgelegte Route des Bedieners bestimmt wird, Routenführungshinweise in Abhängigkeit von der geplanten (R_akt) und der aktuell zurückgelegten Route generiert werden, die Routenführungshinweise auf einer Ausgabeeinheit (3, 4) an den Bediener ausgegeben werden und bei dem in der Vergangenheit von dem Bediener zurückgelegte frühere Routen (R_mem) zu früheren Zielpunkten (Z_mem) in einer Speichereinrichtung (5) abgelegt werden, **dadurch gekennzeichnet, dass** bei Übereinstimmung des aktuellen Zielpunktes (Z_akt) mit einem zu mindestens einer früheren Route (R_mem) gehörenden früheren Zielpunkt (Z_mem) geprüft wird, ob ein in den Zielpunkt (Z) einmündender Endabschnitt der geplanten Route (R_akt) von einem in den Zielpunkt (Z) einmündenden Endabschnitt der mindestens einen früheren Route (R_mem) abweicht, während gleichzeitig der Anfangspunkt (N_gleich) des Endabschnitts der geplanten Route (R_akt) mit dem Anfangspunkt (N_gleich) des Endabschnitts der früheren Route (R_mem) übereinstimmt, und dass in diesem Fall Routenführungshinweise entlang des Endabschnitts der mindestens einen früheren Route (R_mem) generiert und an den Bediener ausgegeben werden.
